Europäisches Patentamt

European Patent Office

Office européen des brevets

(11) Numéro de publication: **0 131 237**
**A1**

# (12) DEMANDE DE BREVET EUROPEEN

(21) Numéro de dépôt: **84107693.8**

(22) Date de dépôt: **03.07.84**

(51) Int. Cl.⁴: **B 23 K 35/00**
**B 23 K 9/02, F 16 L 41/08**

(30) Priorité: **06.07.83 FR 8311261**

(43) Date de publication de la demande:
**16.01.85 Bulletin 85/3**

(84) Etats contractants désignés:
**BE CH DE FR GB IT LI NL SE**

(71) Demandeur: **STEIN INDUSTRIE Société anonyme dite:**
**19-21, Avenue Morane Saulnier B.P. 74**
**F-78141 Velizy-Villacoublay(FR)**

(72) Inventeur: **Franzolini, Marc**
**4, Allée les Fours Blancs Chevry II**
**F-91191 Gif sur Yvette(FR)**

(72) Inventeur: **Maria, Edmond**
**21, rue Albert 1er**
**F-92600 Asnieres(FR)**

(72) Inventeur: **Vanderschaeghe, Alain**
**20, rue Edgard Quinet**
**F-59100 Roubaix(FR)**

(72) Inventeur: **Bezier, Jean**
**319, rue Verte**
**F-59170 Croix(FR)**

(74) Mandataire: **Weinmiller, Jürgen et al,**
**Zeppelinstrasse 63**
**D-8000 München 80(DE)**

(54) **Dispositif d'assemblage de tubes en acier inoxydable ferritique sur une plaque tubulaire en acier de carbone, et procédé de fabrication de ce dispositif.**

(57) Dispositif d'assemblage de tubes (5) en acier inoxydable ferritique à bas carbone et 17 à 18,5% en poids de chrome sur une plaque tubulaire (1) en acier au carbone. Il comprend un premier revêtement (2) d'acier inoxydable austénitique à bas carbone et à 11,50 à 14% en poids de nickel et 22 à 25% en poids de chrome sur la face de la plaque tubulaire opposée au faisceau tubulaire, un second revêtement (3) sur le premier, en acier inoxydable austénitique à bas carbone et à 10 à 12‰ en poids de nickel et 19 à 23% en poids de chrome, dépassant le niveau supérieur des extrémités des tubes, et des cordons de soudure (6) avec ou sans métal d'apport sur le pourtour de ces extrémités entre celles-ci et l'acier inoxydable du second revêtement (3).

EP 0 131 237 A1

Dispositif d'assemblage de tubes en acier inoxydable ferritique sur une plaque tubulaire en acier au carbone, et procédé de fabrication de ce dispositif

La présente invention concerne un dispositif d'assemblage de tubes en acier inoxydable ferritique à bas carbone et à 17 à 18,5% en poids de chrome sur une plaque tubulaire en acier au carbone. Elle s'étend en outre à un procédé de fabrication d'un tel dispositif.

La liaison directe par soudage de l'acier inoxydable ferritique sur l'acier au carbone ne donnant pas de bons résultats, il a déjà été proposé de réaliser un tel assemblage en effectuant au préalable sur la face de la plaque tubulaire opposée au faisceau tubulaire un revêtement par dépôt d'un alliage type "Inconel" (Marque déposée par la Société Inco) à plus de 72% en poids de nickel, 14 à 17% de chrome et 6 à 10% de fer. De tels revêtements sont très coûteux, et il risque d'apparaître des fissurations en zone de liaison et dans le revêtement ainsi que dans les soudures, par corrosion sous tension.

La présente invention a pour but de procurer un dispositif d'assemblage de tubes en acier inoxydable ferritique sur une plaque tubulaire en acier au carbone, à l'aide d'un revêtement par fusion d'un alliage notablement moins coûteux que l'alliage type "Inconel", assurant une bonne étanchéité de la soudure, et réduisant fortement les risques de fissuration en zone de liaison et rechargement et dans les soudures par corrosion sous tension.

Le dispositif d'assemblage selon l'invention est caractérisé en ce qu'il comprend un premier revêtement en acier inoxydable austénitique à bas carbone et à 11,50 à 14% en poids de nickel et 22 à 25% en poids de chrome sur la face de la plaque tubulaire opposée au faisceau tubulaire, un second revêtement sur le premier, en acier inoxydable austénitique à bas carbone et à 10 à 12% en poids de nickel et 19 à 23% en poids de chrome, dépassant le niveau supérieur des extrémités des tubes, et des cordons de soudure avec ou sans métal d'apport sur le pourtour de ces extrémités entre celles-ci et l'acier inoxydable du second rechargement.

De préférence, les aciers inoxydables austénitiques des deux rechargements sont tous deux, en poids, à moins de 0,60% de silicium, moins de 2% de manganèse, moins de 0,025% de phosphore, et moins de 0,025% de soufre. On prendra avantageusement un acier inoxydable austénitique du premier rechargement à moins de 0,025% en poids de carbone, et un acier inoxydable austénitique du second rechargement à moins de 0,020% en poids de carbone.

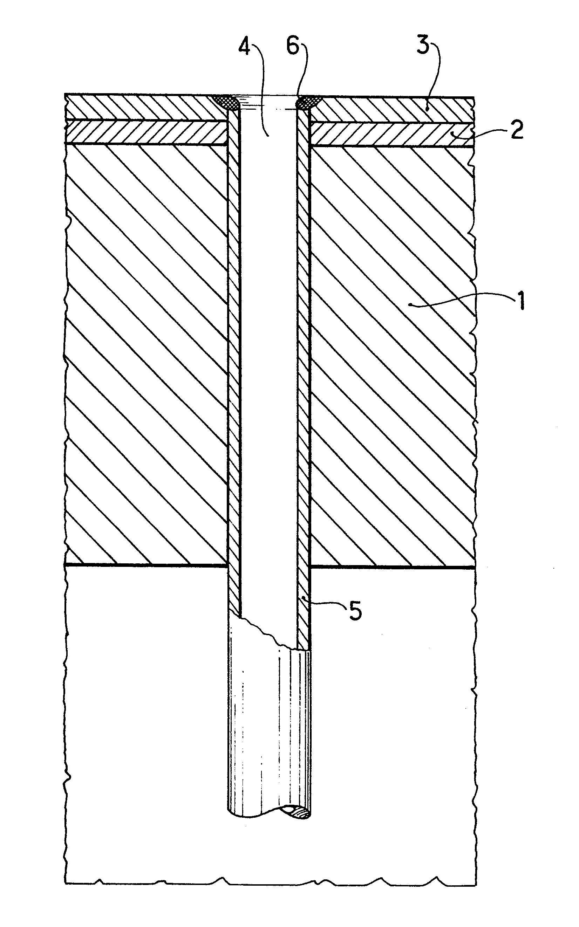

Il est décrit ci-après, à titre d'exemple et en référence à la figure unique du dessin annexé, un assemblage de tubes en acier inoxydable ferritique sur une plaque tubulaire en acier au carbone selon l'invention.

La plaque tubulaire épaisse (1) en acier au carbone non allié de la nuance A 48CP ( pourcentages pondéraux moins de 0,20% de carbone, moins de 0,40% de silicium, de 0,8 à 1,5% de manganèse, moins de 0,040% de phosphore, moins de 0,035% de soufre, moins de 0,50% de nickel, moins de 0,25% de chrome, moins de 0,10% de molybène, moins de 0,05% de vanadium, moins de 0,04% de niobium, au plus 0,18% de cuivre) est munie en premier lieu par dépôt par fusion (feuillard avec flux et électrodes enrobées) d'une couche de revêtement (2) en acier inoxydable austénitique de la nuance dite 309L (moins de 0,025% en poids de carbone, moins de 0,60% de silicium, moins de 2% de manganèse, moins de 0,025% de phosphore, moins de 0,025% de soufre, de 11,5 à 14% de nickel et de 22 à 25% de chrome). Elle est ensuite munie par dépôt (feuillard, flux et électrodes enrobées) d'une seconde couche de revêtement (3) en acier inoxydable austénitique de la nuance dite 308L (moins de 0,020% en poids de carbone, moins de 0,60% de silicium, moins de 2% de manganèse, moins de 0,20% de cobalt, moins de 0,025% de phosphore, moins de 0,025% de soufre, de 10 à 12% de nickel et de 19 à 23% de chrome). On introduit ensuite dans les trous correspondants (4) de la plaque tubulaire les tubes tels que (5), en acier inoxydable ferritique de la nuance Z2 CT18 (17 à 18,5% de chrome, moins de 0,03% de carbone, moins de 0,5% de silicium, moins de 1% de manganèse, moins de 0,03% de phosphore, moins de 0,01% de soufre, moins de 0,50% de nickel, moins de 0,01% de molybdène, moins de 0,10% de cuivre, moins de 0,05% d'aluminium, au plus 0,02% d'azote, avec le total carbone et azote au plus égal à 0,04%, et une teneur en titane égale à 15 fois la somme du carbone et de l'azote, ce produit devant rester inférieur à 0,75%). L'extrémité supérieure des tubes doit venir à un niveau intermédiaire de la seconde couche de rechargement. On réalise alors un cordon de soudure (6) entre l'extrémité du tube et la seconde couche de revêtement par soudage sous gaz inerte (argon et/ou hélium) avec ou sans métal d'apport.

## REVENDICATIONS

1/ Dispositif d'assemblage de tubes en acier inoxydable ferritique à bas carbone et 17 à 18,5% en poids de chrome sur une plaque tubulaire en acier au carbone, caractérisé en ce qu'il comprend un premier revêtement d'acier inoxydable austénitique à bas carbone et à 11,50 à 14% en poids de nickel et 22 à 25% en poids de chrome sur la face de la plaque tubulaire opposée au faisceau tubulaire, un second revêtement sur le premier, en acier inoxydable austénitique à bas carbone et à 10 à 12% en poids de nickel et 19 à 23% en poids de chrome, dépassant le niveau supérieur des extrémités des tubes, et des cordons de soudure avec ou sans métal d'apport sur le pourtour de ces extrémités entre celles-ci et l'acier inoxydable du second revêtement.

2/ Dispositif selon la revendication 1, caractérisé en ce que les aciers inoxydables austénitiques des deux rechargements sont tous deux, en poids, à moins de 0,60% de silicium, moins de 2% de manganèse, moins de 0,025% de phosphore, et moins de 0,025% de soufre.

3/ Dispositif selon la revendication 2, caractérisé en ce que l'acier inoxydable austénitique du premier revêtement est à moins de 0,025% en poids de carbone, et celui du second revêtement à moins de 0,020% en poids de carbone.

4/ Procédé de fabrication du dispositif selon la revendication 1, caractérisé en ce que l'on effectue par dépôt par fusion (feuillard avec flux et électrodes enrobées) sur la face d'une plaque tubulaire en acier au carbone opposée au faisceau tubulaire un premier revêtement d'acier inoxydable austénitique à bas carbone et à 11,50 à 14% en poids de nickel et 22 à 25% en poids de chrome, puis un second revêtement d'acier inoxydable austénitique à bas carbone et à 10 à 12% en poids de nickel et 19 à 23% en poids de chrome, en ce que l'on introduit dans les trous de la plaque tubulaire des tubes en acier inoxydable ferritique à bas carbone et à 17 à 18,5% en poids de chrome, de façon que leurs extrémités viennent à un niveau intermédiaire de la seconde couche de revêtement, et en ce que l'on soude les extrémités du tubes à la seconde couche de revêtement sous gaz inerte avec ou sans métal d'apport.

Office européen
des brevets

**RAPPORT DE RECHERCHE EUROPEENNE**

EP 84 10 7693

## DOCUMENTS CONSIDERES COMME PERTINENTS

| Catégorie | Citation du document avec indication en cas de besoin des parties pertinentes | Revendication concernee | CLASSEMENT DE LA DEMANDE (Int Cl ³) |
|---|---|---|---|
| A | FR-A-1 179 454 (HOESCH) <br><br> --- | | B 23 K 35/00 <br> B 23 K 9/02 <br> F 16 L 41/08 |
| A | FR-A-1 485 354 (FOSTER WHEELER) <br><br> --- | | |
| A | US-A-3 367 414 (F.X. BROWN et al.) <br><br> --- | | |
| A | SCHWEISSEN + SCHNEIDEN, vol. 22, no. 10, octobre 1970, pages 417-421, Deutscher Verlag für Schweisstechnik GmbH, Düsseldorf, DE; H. WIRTZ: "Bedeutung und Anwendung von Pufferschichten beim Schweissen und Metallspritzen" <br><br> --- | | |
| A | SCHWEISSEN + SCHNEIDEN, vol. 34, no. 11, novembre 1982, pages 530-534, Düsseldorf, DE; S. ANIK et al.: "Metallphysikalische Vorgänge beim Schweissen hochlegierter, insbesondere rostbeständiger Stähle – Schweissen" <br><br> ----- | | DOMAINES TECHNIQUES RECHERCHES (Int. Cl. ³) <br><br> B 23 K <br> F 16 L |

Le présent rapport de recherche a été établi pour toutes les revendications

| Lieu de la recherche | Date d'achèvement de la recherche | Examinateur |
|---|---|---|
| LA HAYE | 03-10-1984 | MOLLET G.H.J. |

CATEGORIE DES DOCUMENTS CITES

X : particulièrement pertinent à lui seul
Y : particulièrement pertinent en combinaison avec un autre document de la même catégorie
A : arriere-plan technologique
O : divulgation non-écrite
P : document intercalaire

T : theorie ou principe à la base de l'invention
E : document de brevet antérieur, mais publié à la date de dépôt ou après cette date
D : cité dans la demande
L : cité pour d'autres raisons

& : membre de la même famille, document correspondant